## Europäisches Patentamt

## European Patent Office

## Office européen des brevets

(11) Publication number: **0 242 820 B1**

# EUROPEAN PATENT SPECIFICATION

(45) Date of publication of the patent specification:
**20.12.89**

(51) Int. Cl.⁴: **B 65 G 65/23**

(21) Application number: **87105724.6**

(22) Date of filing: **16.04.87**

(54) **Apparatus for inverting containers.**

(30) Priority: **22.04.86 JP 92678/86**

(43) Date of publication of application:
**28.10.87 Bulletin 87/44**

(45) Publication of the grant of the patent:
**20.12.89 Bulletin 89/51**

(84) Designated Contracting States:
**DE FR GB**

(56) References cited:
**JP-U-60 034 669**

(73) Proprietor: **OSAKA TAIYU COMPANY, LTD., 10-1, Ina 6-chome, Minoo-shi Osaka (JP)**

(72) Inventor: **Okada, Minoru, 5-19, Takanodai 3-chome, Suita-shi Osaka (JP)**
Inventor: **Tabayashi, Yoshikazu, B11-505, 1, Takemidai 4-chome, Suita-shi Osaka (JP)**

(74) Representative: **Patentanwälte TER MEER - MÜLLER - STEINMEISTER, Mauerkircherstrasse 45, D-8000 München 80 (DE)**

## Description

### Field of industrial application

The present invention relates to an apparatus for inverting large containers such as drums to empty the containers.

### Prior art

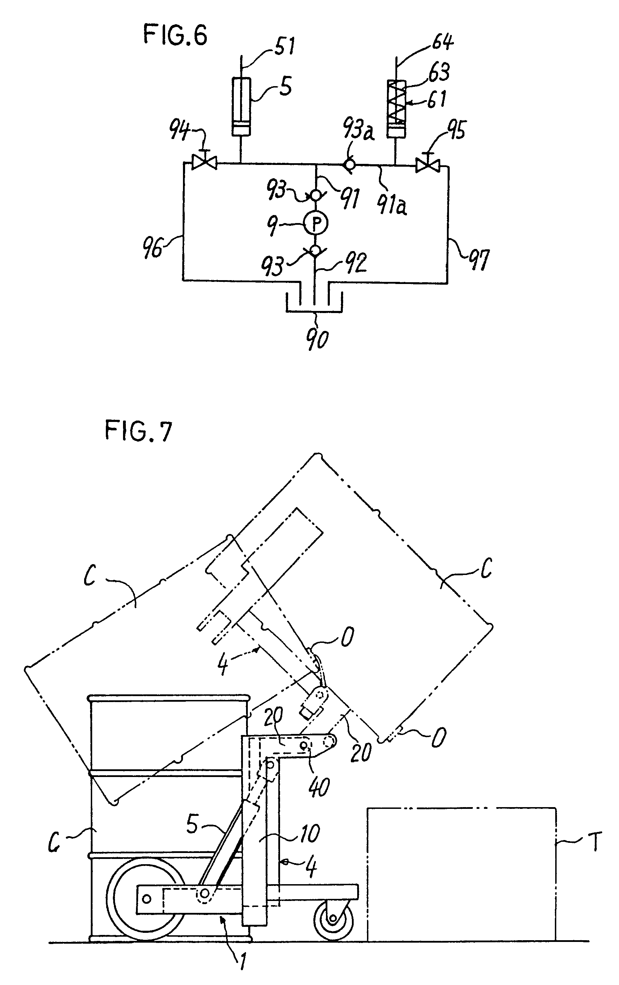

The present applicant has already proposed the container inverting apparatus shown in Fig. 7 (Examined Japanese Utility Model Publication SHO 60-34669).

This inverting apparatus comprises a frame 4 pivotally movable with a container removably embraced therein and fixed at its upper end to a pivot 40 mounted on the upper ends of vertical posts 10 on a base 1. An L-shaped lever 20 has one end secured to one end of the pivot 40 and the other end connected to the piston rod of cylinder means 5. The cylinder means 5 rotates the pivot 40, which in turn pivotally moves the frame 4 attached thereto. The apparatus therefore has the advantage that the contents of the container can be discharged into a storage tank T even if the tank is slightly away from the inverting apparatus.

However, we have found that the inverting apparatus has the following problem. Since the container is turned upside down at a constant speed when the cylinder means 5 is operated the container, if fully filled with contents, permits the contents to spill before reaching a position above the tank T for discharging.

### Summariy of the invention

An object of the present invention, which has been accomplished in view of the above problem, is to provide an inverting apparatus which is adapted to gently incline a container forward at first, thereby moving the discharge opening of the container forward, and subsequently quickly inverting the container from this state so as to overcome the problem.

More specifically, an object of the present invention is to provide a container inverting apparatus which comprises main levers mounted on a base and pivotally movable in a vertical plane, an auxiliary lever pivoted to an upper free end of each main lever and movable in a vertical plane, an inverting frame body attached to the auxiliary levers, a clamp device mounted on the frame body for supporting a container, an inverting cylinder device connected between the auxiliary lever and the base, a contact lever attached to the main lever and a stopper provided on the base. The cylinder device, when operated, pivotally forwardly moves the main levers first to advance the container, whereupon the contact lever comes into contact with the stopper, thereby restraining the main levers from further movement. Subsequently, the auxiliary levers start rotation to invert the container at the advanced position.

### Brief description of the drawings

Fig. 1 is a perspective view showing an inverting apparatus of the present invention;
Fig. 2 is a plan view partly in section and showing a clamp device embodying the invention;

Fig. 3 is a side elevation showing the inverting apparatus with a container held by the clamp device;
Fig. 4 is a side elevation showing the inverting apparatus with main levers inclined to the greatest extent;
Fig. 5 is a side elevation showing the inverting apparatus with the container inverted;
Fig. 6 is a diagram showing a hydraulic circuit;
Fig. 7 is a side elevation showing a conventional inverting apparatus;
Fig. 8 is a perspective view partly broken away and showing another clamp device embodying the invention;
Fig. 9 is a view showing another support means for use in the clamp device of Fig. 8;
Fig. 10 is a fragmentary perspective view showing the inverting apparatus having a lock mechanism attached to its base; and
Fig. 11 is a sectional view showing the lock mechanism of Fig. 10.

### Detailed description of the embodiments

The present invention will be described below in detail with reference to the illustrated embodiments. However, it is to be understood that the embodiments are given for illustrative purposes only and are in no way limitative.

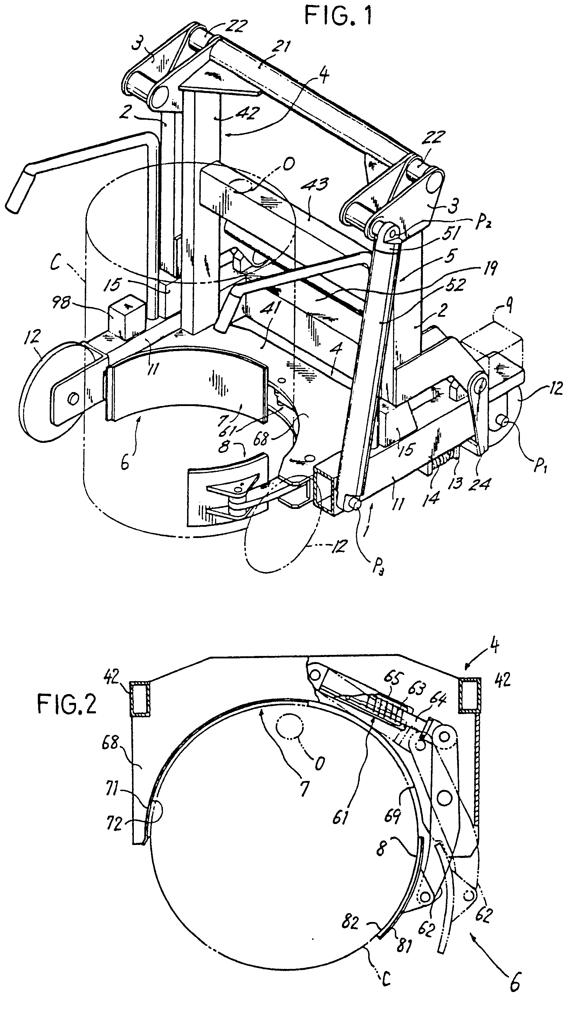

With reference to Fig. 1, the illustrated inverting apparatus has a base 1 which comprises a pair of parallel members 11, 11 extending approximately horizontally from opposite ends of a lateral member 19 perpendicular thereto. The base 1 is provided at each of its four corners with a wheel 12 for transporting a container with ease. A pair of L-shaped main levers 2, 2 are movably attached at their base ends to the parallel members 11, 11 by a pivot P1, at a forward portion of each member 11 toward the direction of discharge.

Opposite ends 22, 22 of an attaching rod 21 rotatably extend through the upper ends of the main levers 2, 2 to interconnect the main levers.

An auxiliary lever 3 is fixedly attached at one end thereof to each end 22 of the attaching rod 21, whereby the auxiliary lever is made rotatable in a plane parallel with the plane of movement of the main lever. An inverting cylinder device 5 has a piston rod 51 which is rotatably connected by a pivot P2 to the other end of one of the auxiliary levers 3. The base end of the cylinder device 5 is similarly rotatably attached to a rear portion of the base 1 by a pivot P3.

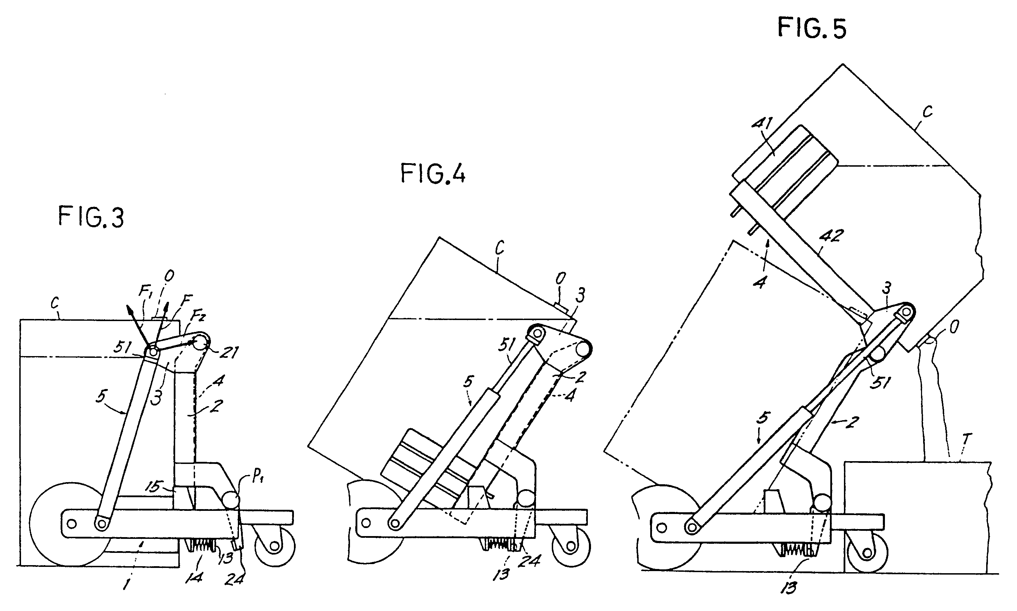

With reference to Fig. 3, the force of advance, F, of the piston rod 51 of the cylinder device 5 is divided into a component F1 acting in a direction to rotate the auxiliary lever 3 and a component F2 acting toward the attaching rod 21. F1 is smaller than the gravity acting on the container and is therefore offset thereby without rotating the auxiliary lever 3. The component F2 acts as a force to rotate the main lever 2, with the result that when the piston rod 51 of the cylinder device 5 operates, the main lever 2 is first moved forward about the pivot P1 to an inclined position.

At the base end of the main lever 2 where it is pivoted to the base 1 as at P1, a contact lever 24 extends downward from the lever 2 integrally therewith. The lever 24 is adapted to come into contact with a stopper 13 on the base 1, whereby the main lever 2 is restrained from further inclining forward.

Referring to Fig. 1 again, the stopper 13 is preferably provided with a shock absorbing spring 14. Preferably, the stopper is so adjusted that the maximum angle of forward inclination of the main lever 2 will be about 30 degrees.

Provided on the upper side of the base 1 is a block 15 for supporting the main lever 2 and preventing the main lever from falling rearward from a vertical position.

An inverting frame body 4 is fixedly joined to the auxiliary levers 3, 3 and to the attaching rod 21 and is thereby pivotally movably supported by the upper ends of the main levers 2, 2.

The inverting frame body 4 comprises a pair of vertical bars 42, 42 and a connecting bar 43 interconnecting these bars. The upper ends of the vertical bars 42, 42 are fixedly joined to the auxiliary levers 3, 3 and the rod 21 as by welding.

Next, a clamp device 6 will be described with reference to the case wherein the container is a cylindrical drum. As seen in Fig. 2, the clamp device 6 comprises a hollow base frame 68 having a recessed semicircular rear portion in conformity with the periphery of the container C, a bearing portion 7 fixed to the recessed portion 69 of the base frame 68, and a holding member 8 movable toward and away from the bearing portion 7.

The bearing portion 7 comprises a thick metal plate 71 bent in conformity with the curvature of the periphery of the container and corresponding approximately to a quarter arc portion of the periphery, and a rubber sheet 72 affixed to the surface of the plate 71. An arm 62 pivotally movable in a horizontal plane is supported approximately at its midportion on the other end of the base frame 68.

The arm 62 has an outer end projecting outward from the base frame 68 and an inner end accommodated within the frame 68. The holding member 8 opposed to the bearing portion 7 is supported by the projecting end of the arm 62 and is pivotally movable in a horizontal plane. The holding member 8 comprises a metal plate 81 bent in conformity with the curvature of the periphery of the container C and corresponding approximately to one-eighth arc portion of the periphery, and a rubber sheet 82 affixed to the inner surface of the metal plate 81.

A hydraulic cylinder device 61 for clamping the container is disposed within the frame 68 and has a return spring 63 within its cylinder and a piston rod 64 pivoted to the inner end of the arm 62.

As shown in Fig. 6, the clamping hydraulic cylinder device 61 and the inverting hydraulic cylinder device 5 are connected in parallel with a hydraulic pressure generator 9 mounted on the base 1 by a branched pipe 91. The generator 9 has a check valve 93 at each of its inlet and outlet sides and the inlet side is in communication with an oil tank 90 via inlet pipe 92.

The line 91a for holding the generator 9 in communication with the clamping cylinder device 61 is provided with a check valve 93a for preventing reverse flow toward the generator. Return channels 96, 97 extending from the devices 5, 61 to the oil tank 90 have pressure relief valves 94, 95, respectively.

The invertion apparatus is used in the following manner.

First, the apparatus is advanced toward a container C to fit the periphery of the container at its discharge opening side O into the recessed portion 69 of the base frame 68 in contact with the bearing portion 7, and the generator 9 is then operated.

Since the two hydraulic cylinder devices 5, 61 are connected in parallel with the generator 9, the hydraulic pressure acts on the piston rods of the two devices 5, 61 at the same time. However, since the force of the spring 63 holding the piston rod 64 of the clamping cylinder device 61 is sufficiently smaller than the resistance acting against the piston rod 51 of the inverting cylinder device 5, the piston rod 64 of the device 61 is advanced first, pressing the holding member 8 against the container C and causing the member 8 and the bearing portion 7 to clamp the container C.

On completion of the clamping, excessive resistance acts on the device 61 to stop the piston rod 64, resulting in a rapid rise in the hydraulic pressure.

The increased pressure in the channel 91 overcomes the resistance to the device 5 and advances the piston rod 51. Because of the aforementioned relation between the gravity on the container and one of the components of the advancing force F of the rod 51, the main levers 2, 2 are first forwardly inclined (Fig. 4). At this time, the container C is slightly raised off the floor and turned about the pivot P1 with the main levers 2, 2, whereby it is moved forward.

Continued operation of the hydraulic pressure generator 9 further advances the piston rod 51 of the device 5, bringing the contact lever 24 at the lower end of the main lever 2 into contact with the stopper 13, whereby the main levers 2 are prevented from further forward inclination. Consequently, the auxiliary levers 3 only rotate forward at the upper ends of the main levers 2, causing the attaching rod 21 and the frame body 4 to rotate with the auxiliary levers 3. The container C is thereby inverted to start discharging its contents into a storage tank T (Fig. 5).

With the inverting apparatus of the present invention, the upper portion of the container C is first forwardly inclined by the forward inclination of the main levers 2 to move the discharge opening O forward, and the container C is subsequently inverted from this state. This obviates the likelihood that the contents will spill before the tank.

To return the emptied container C to the original position, the relief valve 94 for the inverting cylinder device 5 is opened. The inverting frame body 4 is returned to the original position by the gravity acting thereon and on the container.

Even when the inverting hydraulic cylinder device 5 is relieved of the pressure, the check valve 93a prevents the working oil from flowing from the cylinder device 61 reversely toward the device 5, thereby obviating the likelihood that the container will inadvertently fall off the clamp device.

After the container is lowered onto the floor, the relief valve 95 of the clamping cylinder device 61 is opened, allowing the spring 63 in the device 61 to retract the piston rod 64 into the cylinder and opening the holding member 8 to release the container C.

Thus, even if the inverting apparatus is positioned slightly away from the discharge storage tank, the contents of the container can be discharged into the tank. Moreover, there is no likelihood that the contents will spill from the container before the tank after the start of inversion.

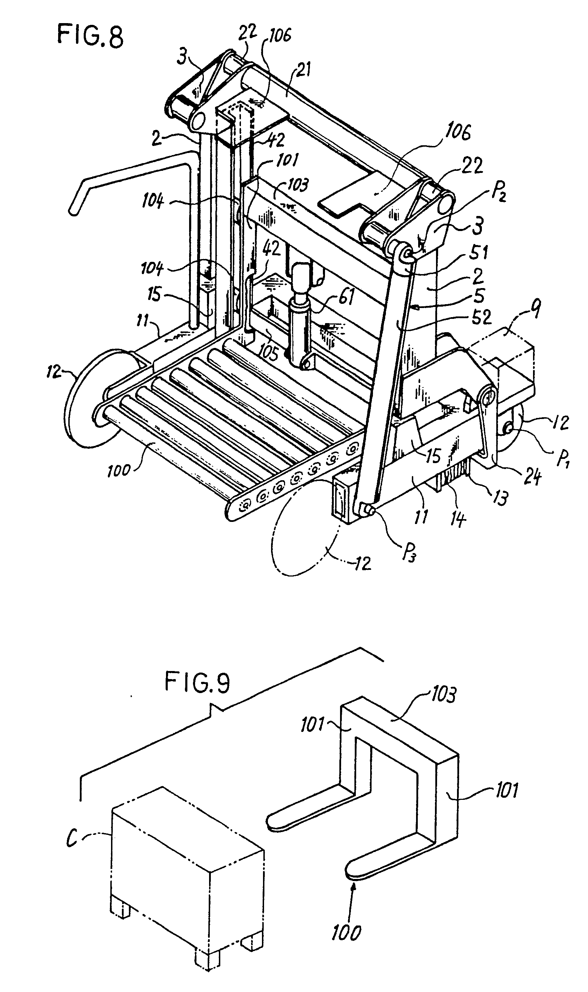

To make the clamp device of the present invention usable for containers of various shapes, the device can be constructed as follows. With reference to Fig. 8, a roller conveyor is used as the support means 100 for placing the container thereon. The present inverting apparatus including such support means 100 can be disposed in the vicinity of the outlet end of a continuous conveyor at the level of the conveyor line for receiving by the support means various containers which are sent forward on the conveyor.

A pair of upright support members 101, 101 are mounted on the front portion of the support means 100 at its opposite sides, and the upper ends of the support members 101 are interconnected by a connecting member 103. The upport members 101 are made slidable along the vertical bars 42 of the inverting frame body 4. Preferably, the vertical bar 42 is in the form of a channel member, outwardly directed roller members 104 are rotatably mounted on the outer side of the support member 101, and the roller members are rollable fitted in the channel member. A mount plate 105 is fixed to and provided between the vertical bars 42, 42, and a clamping cylinder device 61 is attached at its base end to the mount plate 105. The piston rod of the device 61 is fixed to the connecting member 103. Engaging members 106 are attached to the upper ends of the bars 42, 42 or to the attaching rod 21. When the cylinder device 61 is operated, the piston rod of the device 61 advances upward, lifting the support means 100 connected to the connecting member 103 by the support members 101, 101, whereby a container placed on the support means 100 is clamped between the means 100 and the engaging members 106. This clamp mechanism is advantageous since the shape of the containers to be handlad is not limited. Accordingly, the clamp device is usable for rectanguar or square containers, pallet containers of reticular structure carrying small articles, and other containers.

Further if the support means 100 is in the form of the fork of a forklift as seen in Fig. 9, a container having legs at four corners can be easily inverted.

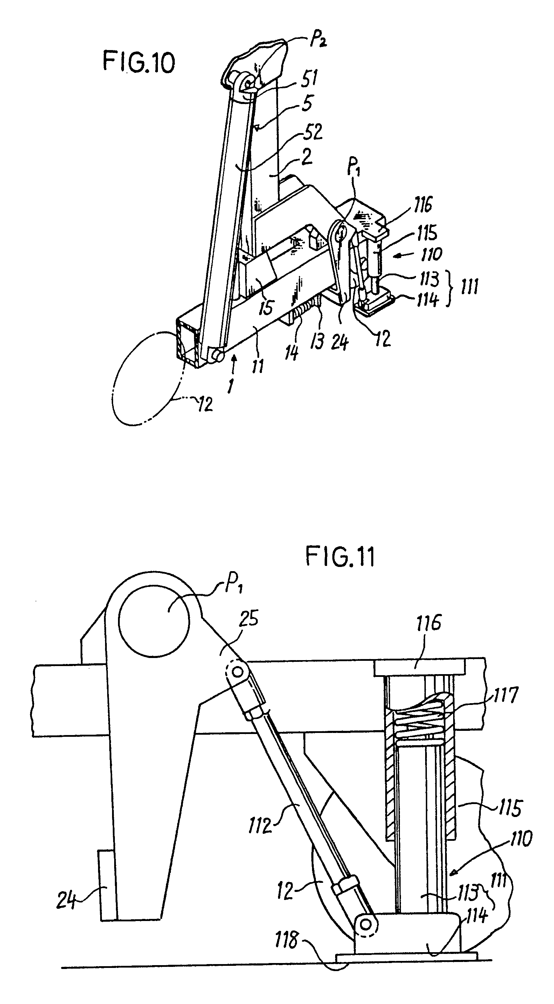

According to the foregoing embodiment, the inverting apparatus is supported only by the wheels 12. It is therefore desirable to provide the following lock mechanism at a front portion of the base 1 to give enhanced longitudinal stability to the apparatus for use with heavy containers. Figs. 10 and 11 show the lock mechanism.

The lock mechanism 110 comprises a support plate 116 attached to each end of the front portion of the base 1, a downwardly directed guide sleeve 115 fixed to the support plate 116, and a lock member 111 engaged in the sleeve 115 and movable upward and downward. The lock member 111 comprises a shank 113 slidably fitted in the guide sleeve 115 and a pressing block 114 fixed to the lower end of the shank 113 and having a floor pressing bottom face 118. The guide sleeve 115 houses therein a spring 117 for biasing the lock member 111 downward.

As seen in Fig. 11, a projection 25 is formed on the main lever 2 in the vicinity of its pivot P1. The projection 25 is connected to the pressing block 114 by a link rod 112 pivoted thereto.

When the main lever 2 is forwardly inclined with a container clamped by the clamp device as already stated, the lock member 111 connected to the main lever by the link rod 112 is pushed downward outwardly of the guide sleeve 115, whereby the pressing block 114 of the lock member 111 is pressed against the floor to raise the wheel 12 off the floor. The container can then be inverted in a stabilized state. The contact lever 24 in contact with the stopper restrains the main lever 2 from pivotally moving further forward as already described.

The present invention is not limited to the foregoing embodiments, but various modifications can be made within the technical scope defined in the appended claims.

## Claims

1. An apparatus for inverting a container comprising:
a pair of main levers (2) each pivotally supported at its lower portion by a base (1) and each pivotally movable in a vertical plane, an attaching rod (21) being rotatably supported by the main levers and extending through an upper portion of each main lever,
auxiliary levers (3) secured to the attaching rod (21) and each rotatabe in a vertical plane,
a container inverting frame body (4) secured to the auxiliary levers (3) and pivotally movable with the auxiliary levers,
a clamp device (6) provided on the frame body (4) for supporting the container,
a cylinder device (5) having one end connected to the auxiliary lever (3) and the other end attached to the base (1) for pushing the auxilary lever (3) in a container inverting direction,
a contact lever (24) projecting from at least one of the main levers (2), and
a stopper (13) provided on the base,
the contact lever (24) being movable into contact with the stopper (14) to thereby limit the angle of rotation of the main levers (2) subsequently permitting the rotation of the auxiliary levers (3).

2. An apparatus as defined in claim 1 wherein the base (1) comprises at least one lateral member (19) and a pair of parallel members (11) attached to opposite ends of the lateral member and extending substantially horizontally perpendicular thereto.

3. An apparatus as defined in claim 1 wherein the inverting frame body (4) comprises vertical bars (42) secured to the auxiliary levers (3) and/or the attaching rod (21), and a connecting bar (43) interconnecting the vertical bars (42).

4. An apparatus as defined in claim 3 wherein the clamp device (6) comprises a base frame (68) formed with a recessed portion conforming to the outer peripheral shape of a substantially cylindrical container, a bearing portion (7) and a holding member (8) each formed in conformity with the outer peripheral shape of the cylindical container, and a clamping cylinder device (61), the bearing portion (7) being fixed to the recessed portion, the holding member (8) being opposed to the bearing portion (7) and being movable toward and away from the bearing portion (7) when driven by the cylinder device.

5. An apparatus as defined in claim 3 wherein the clamp device (6) comprises support means (100) for placing the container thereon, support members (101) extending upward from the support means at ist opposite sides, a connecting member (103) interconnecting the support members, an engaging member (106) secured to the frame body (4) and a clamping cylinder device (61), the cylinder device (61) having one end connected to a mount plate (105) attached to the vertical bars (42) and the other end connected to the connecting member (103), the support means (100) being movable upward and downward relative to the vertical bars (42) of the frame body (4) by the operation of the cylinder device (61).

6. An apparatus as defined in claim 5 wherein the support means (100) is a roller conveyor.

7. An apparatus as defined in claim 5 wherein the support means (100) is the fork of a forklift.

8. An apparatus as defined in claim 1 wherein the base has a wheel (12) at each of its four corners and a lock mechanism (110) for locking the base (1) to the floor, the lock mechanism (110) comprising a lock member (111) provided at each end of the front portion of the base (1) and movable upward and downward, and a link rod (112) connected to the base end of the main lever (2) and to the lock member (111), the lock member (111) being downwardly movable into pressing contact with the floor through the link rod (112) by forward inclination of the main lever (2) to clock the base (1) to the floor.

**Patentansprüche**

1. Vorrichtung zum Umkehren eines Behälters, mit

zwei Haupthebeln (2), die jeweils an ihrem unteren Endbereich schwenkbar durch eine Basis (1) abgestützt sind und in einer senkrechten Ebene schwenkbar beweglich sind, wobei eine Befestigungsstange (21) drehbar durch die Haupthebel abgestützt ist und sich durch den oberen Bereich der beiden Haupthebel erstreckt,

Hilfshebeln (3), die an der Befestigungsstange (21) angebracht und in einer senkrechten Ebene drebbar sind,

einem Umkehr-Rahmenkörper (4) für den Behälter, der an den Hilfshebeln (3) befestigt und mit diesen schwenkbar ist,

einer Klemmeinrichtung (6) an dem Rahmenkörper (4) zur Abstützung des Behälters,

einer Zylindereinrichtung (5), die an einem Ende mit dem Hilfshebel (3) verbunden und am anderen Ende an der Basis (1) befestigt ist und den Hilfshebel (3) in eine einen Behälter umkehrende Richtung verschiebt,

einem Kontakthebel (24), der von wenigstens einem der Haupthebel (2) vorspringt, und

einem Anschlag (13) an der Basis,

welcher Kontakthebel (24) in Berührung mit dem Anschlag (14) beweglich ist und damit den Drehwinkel der Haupthebel (2) begrenzt und anschließend die Drehung der Hilfshebel (3) gestattet.

2. Vorrichtung nach Anspruch 1, bei der die Basis (1) wenigstens ein seitliches Teil (19) und zwei parallele Teile (11) umfaßt, die an gegenüberliegenden Enden des seitlichen Teils befestigt sind und sich im wesentlichen waagerecht und senkrecht zu diesem erstrecken.

3. Vorrichtung nach Anspruch 1, bei der der Umkehr-Rahmenkörper (4) senkrechte Stangen (42) umfaßt, die an den Hilfshebeln (3) und/oder der Befestigungsstange (21) befestigt sind, sowie eine Verbindungsstange (43) die die senkrechten Stangen (42) verbindet.

4. Vorrichtung nach Anspruch 3, bei der die Klemmeinrichtung (6) einen Basisrahmen (68) der mit einem ausgesparten Bereich zur Anpassung an die äußere Umfangsform eines im wesentlichen zylindrischen Behälters versehen ist, einen Lagerbereich (7) und ein Halteteil (8), die jeweils entsprechend der äußeren Umfangsform des zylindrischen Behälters geformt sind, und eine Klemmzylindereinrichtung (61) umfaßt, welcher Lagerbereich (7) an dem ausgesparten Bereich befestigt ist, welches Halteteil (8) dem Lagerbereich (7) gegenüberliegt und in Richtung des Lagerbereichs (7) und von diesem fort beweglich ist, wenn es durch die Zylindereinrichtung angetrieben wird.

5. Vorrichtung nach Anspruch 3, bei der die Klemmeinrichtung (6) eine Stützeinrichtung (100) zum Aufstellen des Behälters auf dieselbe, Stützglieder (101), die sich nach oben von der Stützeinrichtung auf gegenüberliegenden Seiten erstrecken, ein Verbindungsglied (103), das die Stützglieder verbindet ein Eingriffsglied (106), das an dem Rahmenkörper (4) befestigt ist, und eine Klemmzylindereinrichtung (61) umfaßt, welche Zylindereinrichtung (61) an einem Ende mit einer Montageplatte (105) verbunden ist, die an den senkrechten Stangen (42) befestigt ist, und am anderen Ende verbunden ist mit dem Verbindungsglied (103), welche Stützeinrichtung (100) aufwärts und abwärts in bezug auf die senkrechten Stangen (42) des Rahmenkörpers (4) durch Betätigung der Zylindereinrichtung (61) beweglich ist.

6. Vorrichtung nach Anspruch 5, bei der die Stützeinrichtung (100) ein Rollenförderer ist.

7. Vorrichtung nach Anspruch 5, bei der die Stützeinrichtung (100) die Gabel einer Hubgabel ist.

8. Vorrichtung nach Anspruch 1, bei der die Basis (1) ein Rad (12) an jeder ihrer vier Ecken und einen Verriegelungsmechanismus (110) zur Verriegelung der Basis (1) am Boden umfaßt, welcher Verriegelungsmechanismus (110) ein Riegelteil (111) an jedem Ende des vorderen Bereichs der Basis (1), das aufwärts und abwärts beweglich ist, und eine Verbindungsstange (112), die mit dem Basisende des Haupthebels (2) und dem Riegelteil (111) verbunden ist, umfaßt, welches Riegelteil (111) nach unten in Druckkontakt mit dem Boden über die Verbindungsstange (112) durch Vorwärtsneigung des Haupthebels (2) zur Verriegelung der Basis (1) am Boden beweglich ist.

**Revendications**

1. Appareil pour renverser un récipient, comportant:

une paire de leviers principaux (2) supportés chacun au niveau de sa partie inférieure par une base (1) au moyen d'un pivot et susceptibles de pivoter chacun dans un plan vertical, une barre de fixation (21) étant supportée de manière à pouvoir tourner par les leviers principaux et s'étendant à travers une partie supérieure de chaque levier principal,

des leviers auxiliaires (3) fixés à la barre de fixation (21) et pouvant tourner chacun dans un plan vertical,

un corps (4) de bâti de renversement de récipient, fixé aux leviers auxiliaires (3) et susceptible de pivoter avec les leviers auxiliaires,

un dispositif de serrage (6) présent sur le corps (4) de bâti pour supporter le récipient;

un dispositif formant cylindre (5) ayant une première extrémité reliée au levier auxiliaire (3) et l'autre extrémité fixée à la base (1) pour pousser le levier auxiliaire (3) dans le sens du renversement du récipient,

un levier de contact (24) dépassant d'au moins l'un des leviers principaux (2), et

une butée (13) présente sur la base,

le levier de contact (24) pouvant être amené au contact de la butée (14) pour limiter de ce fait l'angle de rotation des leviers principaux (2), en permettant ultérieurement la rotation des leviers auxiliaires (3).

2. Appareil selon la revendication 1, dans lequel la base (1) comporte au moins un élément latéral (19) et deux éléments parallèles (11) fixés aux extrémités opposées de l'élément latéral et s'étendant, de manière sensiblement horizontale, perpendiculairement à celui-ci.

3. Appareil selon la revendication 1, dans lequel le corps (4) de bâti de renversement comporte des barreaux verticaux (42) fixés aux leviers auxiliaires (3) et/ou à la barre de fixation (21), et un barreau de liaison (43) reliant entre eux les barreaux verticaux (42).

4. Appareil selon la revendication 3, dans lequel le dispositif de serrage (6) comporte un bâti formant base (68) présentant une partie creuse épousant la forme périphérique extérieure d'un récipient sensiblement cylindrique, une partie d'appui (7) et un élément de retenue (8) épousant chacun la forme périphérique extérieure du récipient cylindrique, et un dispositif formant cylindre de serrage (61), la partie d'appui (7) étant fixée à la partie creuse, l'élément de retenue (8) étant opposé à la partie d'appui (7) et étant rapprochable et éloignable de la partie d'appui (7) sous l'action du dispositif formant cylindre.

5. Appareil selon la revendication 3, dans lequel le dispositif de serrage (6) comporte un moyen de support (100) pour que le récipient y soit placé, des éléments de support (101) s'étendant vers le haut depuis le moyen de support au niveau de ses côtés opposés, un élément de liaison (103) reliant entre eux les éléments de support, un organe d'engagement (106) fixé au corps (4) de bâti et un dispositif formant cylindre de serrage (61), le dispositif formant cylindre (61) ayant une extrémité reliée à une plaque de montage (105) fixée aux barreaux verticaux (42) et l'autre extrémité reliée à l'élément de liaison (103), le moyen de support (100) étant levable et abaissable par rapport aux barreaux verticaux (42) du corps (4) de bâti sous l'action du dispositif formant cylindre (61).

6. Appareil selon la revendication 5, dans lequel le moyen de support (100) est un convoyeur à rouleaux.

7. Appareil selon la revendication 5, dans lequel le moyen de support (100) est la fourche d'un élévateur à fourche.

8. Appareil selon la revendication 1, dans lequel la base (1) a une roue (12) à chacun de ses quatre angles et un mécanisme d'immobilisation (110) pour immobiliser la base (1) au sol, le mécanisme d'immobilisation (110) comportant un organe d'immobilisation (111) présent à chaque extrémité de la partie antérieure de la base (1) et levable et abaissable, et une bielle de liaison (112) reliée à l'extrémité, côté base, du levier principal (2) et à l'organe d'immobilisation (111), l'organe d'immobilisation (111) étant abaissable jusqu'à venir appuyer contre le sol par l'intermédiaire de la bielle de liaison (112), du fait de l'inclinaison du levier principal (2) vers l'avant afin d'immobiliser la base (1) au sol.

# FIG. 1

# FIG. 2

7

FIG.5

FIG.4

FIG.3

# FIG.6

# FIG.7

FIG.8

FIG.9

FIG.10

FIG.11